# EUROPEAN PATENT APPLICATION

(11) **EP 4 786 142 A1**
(43) Date of publication of application: **05.08.2026**
(21) Application number: 26156136.9
(22) Date of filing: 03.02.2026
(51) Int. Cl.: B29C 51/08, B29C 51/12, B29C 51/26, B29C 51/42, B29C 51/20, B29C 51/46, B29L 31/00

(54) **APPARATUS AND METHOD FOR PRODUCING A THERMOFORMED OBJECT**

(30) Priority: 03.02.2025 IT 202500001974
(71) Applicant: Cannon Ergos S.P.A., 20121 Milan (IT)
(72) Inventor: FIORENTINI, Francesco, 20121 Milan (IT); MAYRHOFER, Christoph, 20121 Milan (AT)
(74) Representative: Luppi Intellectual Property S.r.l.

(57) **Abstract**

An apparatus (1) for the production of a thermoformed object is described, comprising a feeding station (3) for a first sheet material (4) and a second sheet material (5), a first and a second heating station (6, 7), a forming station (8), lower conveying means (9) for conveying the first sheet material (4) from the feeding station (3) to the forming station (8) through the first heating station (6) along a first displacement direction (X1) and upper conveying means (10) for conveying the second sheet material (5) from the feeding station (3) to the forming station (8) through the second heating station (7) along a second displacement direction (X2). The upper conveying means (10) and the lower conveying means (9) are drivable independently of one another and are movable respectively along a first conveying path (P1) and a second conveying path (P2) which are parallel, horizontal and arranged one above the other. A method for the production of a thermoformed object is also described.

## Description

### Background of the invention

The invention relates to an apparatus and a method for producing a thermoformed object.

More precisely, the present apparatus and method can be used to thermoform a pair of sheet materials made of plastic, in particular of thermoplastic material, in order to make a finished product, in particular a hollow finished product, such as for example a support platform for packaging, also called "twin-sheet pallet" or "pallet". The apparatus and method in object are used in the logistics sector; the pallets, in fact, serve as a support for other products to be transported, such as motors (electric or thermal). To ensure a correct support of the products to be transported, the pallet can be reinforced by interposing reinforcing inserts between the two sheet materials, for example made of metal material.

In addition, or alternatively, the apparatus and the method for producing a thermoformed object can also be used to manufacture suitcase shells, sporting articles, car parts and the like.

### State of the art

Apparatuses of the carousel-type thermoforming machines (i.e., "Rotary machine") are known, having a feeding and unloading station, two heating stations and a forming station arranged in a circle with respect to a single rotating conveying structure which advances in sequence the sheet materials along a circular path through all the above stations. The conveying structure is formed by several gripping frames for the sheets, such frames being interconnected and fixed to one another and moving simultaneously to advance the respective sheet materials through the various stations.

In the forming station(s) two half-moulds (lower and upper) are provided which are adapted to cooperate to form and give the desired geometric shape to the sheet materials.

In the forming station(s) there occurs in a sequential manner first the forming operation of a first sheet and subsequently the forming operation of a second sheet. The first and second sheet are then mutually joined to make the thermoformed object.

The apparatuses of the known art have some limits, as reported below.

A first limit is given by the not satisfactory versatility and adaptability to the various production needs. In particular, the apparatuses of the known art are inefficient in terms of production change and unsuitable to satisfy a production of small batches of finished product.

The various stations of the apparatuses of the known art are difficultly accessible from the outside and this makes very complex and difficult the replacement of components or other operations. The forming station of the known apparatuses is accessible from one side only (the outer one, facing the periphery of the carousel) and this makes difficult to carry out an operation of replacing the half-moulds in order to be able to start the thermoforming of different formats or product geometries. In fact, the inner side of the forming station faces towards the rotating frame, while the two remaining sides border respectively with the feeding and unloading station and with a heating station. The half-moulds are heavy and bulky and therefore difficult to move; this is aggravated by the fact of having at disposal only one access side to the forming station.

Furthermore, the fact that also the feeding and unloading station is difficultly accessible from the outside and that one same station is used both for feeding and unloading leads to a complication in managing the loading of sheets with different characteristics. For example, it could indeed be necessary to employ one sheet of one material and the other of another material compatible with the first, or of different thickness or colour, or even of different size.

A further drawback of the known apparatuses is that the latter are relatively bulky and therefore require large surfaces on the floor; they are therefore unsuitable to be installed in restricted spaces.

Another drawback is that in the apparatuses of the known art, the conveying structure remains stationary during the whole forming phase and the subsequent cooling of the thermoformed product, since the same support structure remains blocked stationarily between the two closed half-moulds and therefore it is necessary to wait a certain amount of time before being able to proceed with the thermoforming of a subsequent object; because of this waiting time or non-operativity of the conveying device, the productive cycle-times therefore result to be rather not optimised.

In the apparatuses of the known art, two heating stations are provided upstream of the forming station; the two heating stations process in sequence the first and the second sheet; the delay between the first and the second sheet leads to a certain cooling of the first sheet, compromising the quality of the operation of joining and uniting between the two sheets.

Apparatuses of thermoforming are also known which provide two laterally converging paths in a forming station, each path crossing a feeding/loading station and a heating station for the respective sheet; downstream of the forming station an unloading station finds space with difficulty, possibly overlapping with the space necessary for the mould change.

This arrangement also presents the same drawbacks relating to the scarce accessibility - the production change indeed results difficult since the forming station is interposed between the two heating stations and the unloading station, to the structural complexity - given by the provision of two loading stations with respective centering stations for the sheets to be loaded - and to the low productive yield - due to the fact that also in this case the conveying structure remains "trapped" in the forming station.

Apparatuses are also known for the production of thermoformed objects with a single station, the configuration of these apparatuses, however, cannot heat both sides of the sheets, does not allow the use of a countermould nor does it provide for the integration of reinforcing inserts in the thermoformed object, thus making a finished product of poor quality with a low productive yield.

In light of what has been set out above, there are therefore wide margins for improvement for the apparatuses and methods for the production of thermoformed object.

In particular, it would be desirable to have an apparatus and a method more versatile and efficient for the production of thermoformed object. In particular, it would be desirable to provide an apparatus which requires reduced floor encumbrance and which is also simplified from the structural point of view compared to the devices of the state of the art. Another advantage sought is the optimisation of the sequence of the operations in view of productivity.

### Objects of the invention

An object of the invention is to improve the current apparatuses and methods for producing a thermoformed object.

A further object is to provide an apparatus and a method for producing a thermoformed object which is productively efficient allowing a rational flow of the materials.

Another object is to provide an apparatus and a method for producing a thermoformed object with a high productive flexibility.

Another further object is to provide an apparatus for producing a thermoformed object with a relatively reduced footprint and which allows a high accessibility to the various parts that compose it, in particular an eased accessibility to the forming area to carry out more actions without the risk that parts of the apparatus mutually interfere.

A still further object is to provide an apparatus for producing a thermoformed object which is structurally simple.

These objects and still others are achieved through an apparatus and a method for the production of a thermoformed object as defined in the appended claims.

### Brief Description of the Drawings

The invention can be better understood and implemented with reference to the attached drawings, which illustrate an exemplary and non-limiting embodiment thereof, in which:
Figure 1 is a schematic perspective view of an apparatus for producing a thermoformed object according to the invention in a first operating configuration;
Figures 2 to 25 are schematic perspective views of the apparatus in various operating configurations of production of the thermoformed object.

### Detailed Description

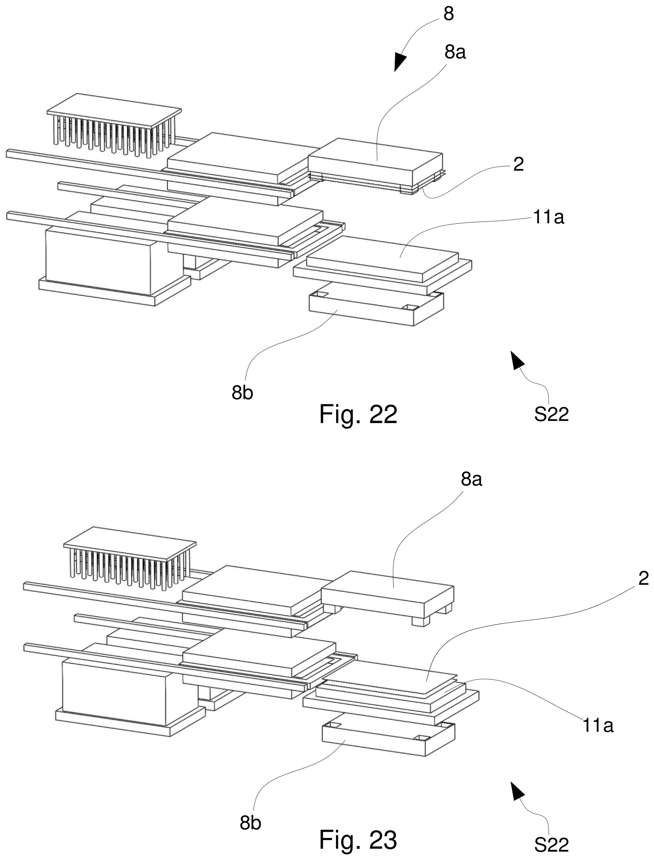

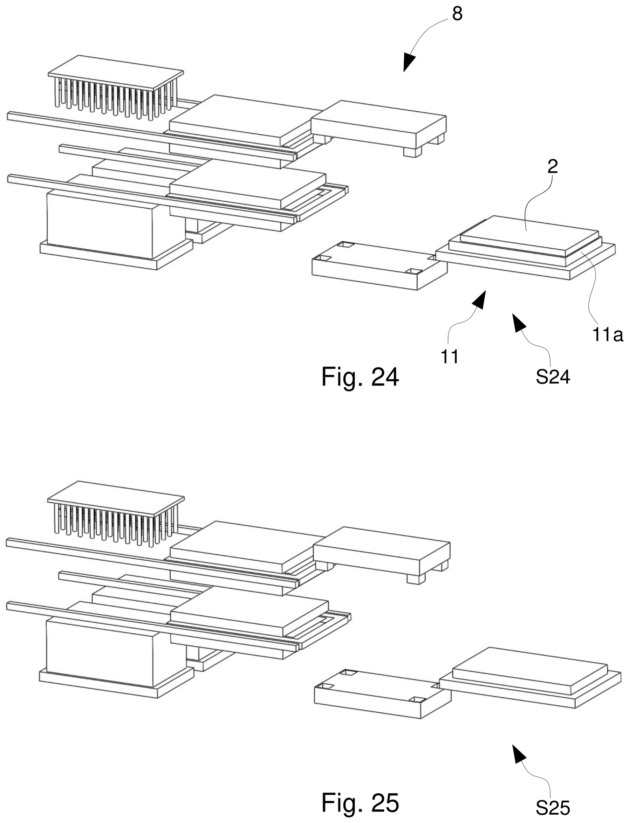

With reference to the above-mentioned figures, an apparatus for the production of a thermoformed object 2 is indicated with the numerical reference 1 (Figures 23 and 24).

The apparatus 1 can be used to thermoform a pair of sheet materials 4, 5 made of plastic, in particular made of thermoplastic material, to make the thermoformed product 2.

The thermoformed product 2 can be hollow, and can be, for example, a support platform for packaging, also called "twin-sheet pallet" or "pallet". The apparatus 1 can be used in the logistics sector. The above pallets, in fact, serve as a support for other products to be transported, such as for example motors (electric or thermal). As described in the following of the present description, to guarantee a correct support for the products to be transported, the pallet can be reinforced by interposing reinforcing inserts between the two sheet materials 4, 5.

The apparatus 1 can be used, however, also to manufacture suitcase shells, sporting articles, car parts and the like.

The apparatus 1 comprises a feeding station 3 for a first sheet material 4 and a second sheet material 5, a first heating station 6 for heating the first sheet material 4 and a second heating station 7 for heating the second sheet material 5.

The apparatus 1 further comprises a forming station 8 for forming and joining the first sheet material 4 and the second sheet material 5 so as to make the object 2 (Figure 23).

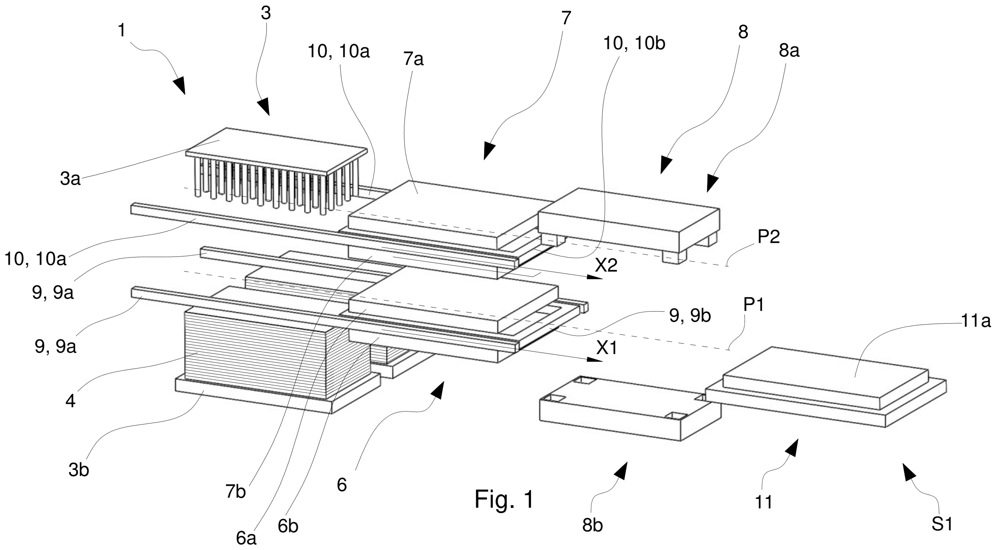

The apparatus 1 comprises lower conveying means 9 configured to convey the first sheet material 4 from the feeding station 3 to the forming station 8 through the first heating station 6 along a first displacement direction X1, and upper conveying means 10 configured to convey the second sheet material 5 from the feeding station 3 to the forming station 8 through the second heating station 7 along a second displacement direction X2 (Figure 1).

The lower conveying means 9 and the upper conveying means 10 are drivable independently of one another respectively in the first displacement direction X1 and in the second displacement direction X2.

In the context of the invention, the first displacement direction X1 and the second displacement direction X2 are intended as kinematic directions defined respectively by the lower conveying means 9 and by the upper conveying means 10.

In the illustrated embodiment (Figure 1), the first displacement direction X1 and the second displacement direction X2 are mutually parallel and vertically superimposed at different heights.

The heights described are taken with respect to a horizontal reference plane. In other words, the first displacement direction X1 and/or the second displacement direction X2 is/are parallel to the horizontal reference plane. In other words, the normal to the reference plane is orthogonal with respect to the first displacement direction X1 and/or the second displacement direction X2.

The lower conveying means 9 and the upper conveying means 10 are movable respectively along a first conveying path P1 and a second conveying path P2. The first conveying path P1 and the second conveying path P2 extend parallel and horizontally one at a height higher than the other (Figure 1).

In the context of the invention, the terms "upstream" and "downstream" are referred to one among the first conveying path P1 and the second conveying path P2.

The lower conveying means 9 include, in particular, a lower gripping frame 9b which is movable and configured to engage with the first sheet material 4 and lower support and guide means 9a which are stationary and configured to support and guide the lower gripping frame 9b - and therefore the first sheet material 4 - along the first displacement direction X1. The lower gripping frame 9b comprises, in particular, perimetrically lower gripping means configured to engage a peripheral portion of the first sheet material 4.

The lower support and guide means 9a comprise at least one lower rail body which extends prevalently (parallelly) along the first displacement direction X1 to define the first conveying path P1.

In the illustrated embodiment, two mutually parallel lower rail bodies are provided arranged to guide and support the lower gripping frame 9b at two lateral portions thereof.

In the illustrated embodiment, the lower support and guide means 9a extend (horizontally) from the feeding station 3 to the first heating station 6. The lower support and guide means 9a are arranged at a first height which is lower with respect to a second height at which the upper support and guide means 10a are arranged.

The lower support and guide means 9a extend from the feeding station 3 to the first heating station 6 so as to be outside the forming station 8 and not to interfere with the latter.

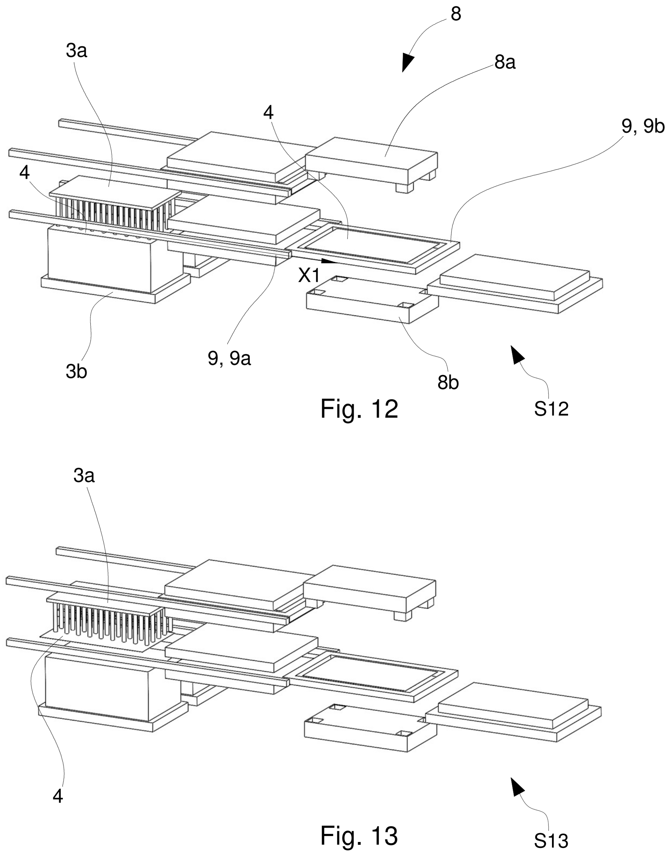

The lower gripping frame 9b is movable from several supporting operating positions S1-S11 (Figures 1 to 11) in which the lower gripping frame 9b is supported by, and rests on, the lower support and guide means 9a to a lower cantilever operating position S12-S16 (Figures 12 to 16) in which the lower gripping frame 9b protrudes in cantilever fashion with respect to the lower support and guide means 9a along the first displacement direction X1. The lower cantilever operating position S12-S16 allows to position the first sheet material 4 in the forming station 8.

In the illustrated embodiment, the upper conveying means 10 have a configuration similar to that of the lower conveying means 9.

The upper conveying means 10 comprise, in particular, an upper gripping frame 10b which is movable and configured to engage with the second sheet material 5 and upper support and guide means 10a which are stationary and configured to support and guide the upper gripping frame 10b - and therefore the second sheet material 5 - along the second displacement direction X2. The upper gripping frame 10b comprises, in particular, perimetrically upper gripping means configured to engage a peripheral portion of the second sheet material 5.

The upper support and guide means 10a comprise at least one upper rail body which extends prevalently (parallelly) along the second displacement direction X2 to define the second conveying path P2.

In the illustrated embodiment, two mutually parallel upper rail bodies are provided arranged to guide and support the upper gripping frame 10b at two lateral portions thereof.

In the illustrated embodiment, similarly to the lower support and guide means 9a, the upper support and guide means 10a extend from the feeding station 3 to the second heating station 7 so as to be outside the forming station 8 and not to interfere with the latter.

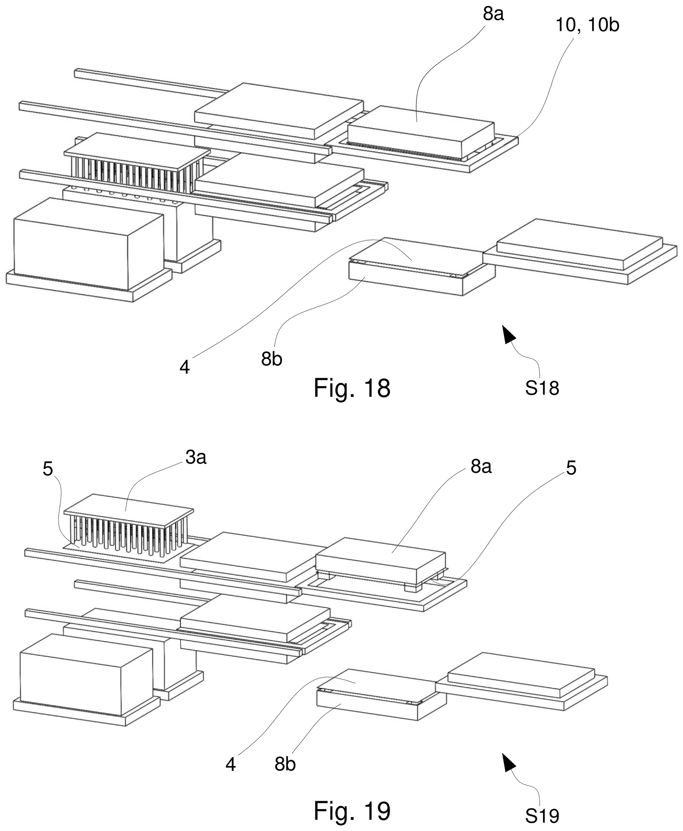

The upper gripping frame 10b is movable from several supporting operating positions S1-S16 (Figures 1 to 16) upper in which the upper gripping frame 10b is supported by the upper support and guide means 10a and rests on the latter and two upper cantilever operating positions S18, S19 (Figures 18 and 19) in which the upper gripping frame 10b protrudes in cantilever fashion with respect to the upper support and guide means 10a along the second displacement direction X2. The two upper cantilever operating positions S12-S16 allow to position the second sheet material 5 in the forming station 8.

The lower gripping means provided in the lower gripping frame 9b and the upper gripping means provided in the upper gripping frame 10b can comprise one or more clamp devices or one or more vacuum devices arranged to retain the sheet material 4, 5 in the respective frame body 9b, 10b.

The apparatus 1 comprises, in particular, a control unit configured to control the operating parameters of the various stations of the apparatus 1, in particular of the feeding station 3, of the first heating station 6, of the second heating station 7, of the forming station 8, of the lower conveying means 9 and of the upper conveying means 10, as will be explained in more detail in the following of the present description.

In particular, the control unit can be configured to drive the lower conveying means 9 independently of the upper conveying means 10. More in detail, the control unit can be configured to adjust the position of the lower frame body 9b - along the first displacement direction X1 - independently of the position of the upper frame body 10b - along the second displacement direction X2.

The first heating station 6 and the second heating station 7 have the function of heating and softening the respective sheet materials 4, 5 so as to facilitate their subsequent deformation and their reciprocal welding (or joining) once they are processed in the forming station 8.

In the illustrated embodiment, the first heating station 6 is arranged below the second heating station 7.

Furthermore, in the illustrated embodiment, the first heating station 6 and the second heating station 7 are positioned vertically aligned one on the other. In other words, the first heating station 6 and the second heating station 7 can have the same footprint.

In a non-illustrated embodiment, the first heating station 6 and the second heating station 7 are positioned in a "offset" manner with respect to one another, so that one is (at least partially) more downstream than the other.

In the illustrated embodiment, the first heating station 6 comprises a first upper bank 6a bearing a plurality of upper heating elements and a first lower bank 6b bearing a plurality of lower heating elements. The lower conveying means 9 are interposed between the first upper bank 6a and the first lower bank 6b so that the first sheet material 4, when located in the first heating station 6, is exposed on opposite sides to the heating radiation emitted by the heating elements.

The second heating station 7 has a configuration similar to that of the first heating station 6, with a first upper bank 7a and a second lower bank 7b arranged respectively above and below the upper conveying means 10 to heat from two opposite sides the second sheet material 5.

Each heating element (of the first heating station 6 and/or of the second heating station 7) can be configured to heat an area portion of the first sheet material 4 towards which the heating element is facing. The heating elements may comprise electric resistance elements heating prevalently in the infrared range.

The control unit can be configured to set a first heating power deliverable by the first heating station 6 independently of a second heating power deliverable by the second heating station 7. Such configuration of the control unit allows to adapt the thermal power deliverable based on the specific characteristics of the sheet material 4, 5 to be heated.

In addition, or alternatively, the control unit can be configured to activate, vary during the heating cycle and selectively control the first heating station 6 and the second heating station 7 to deliver the first heating power and the second heating power respectively independently of one another.

Furthermore, or alternatively, the control unit can be configured to define start-up times and set time durations of heating-power delivery of the first heating station 6 and of the second heating station 7 independently of one another.

The forming station 8 comprises, in particular, an upper moulding body 8a and a lower moulding body 8b movable in mutual approaching and distancing along a vertical operating direction which is transverse to the first displacement direction X1 (or equivalently to the second displacement direction X2) to contact and deform the first sheet material 4 and the second sheet material 5 to make the thermoformed object 2.

The forming station 8 could comprise (should the functionality not be performed by the upper moulding body 8a) furthermore a forming countermould movable along an operating direction with a horizontal component which is transverse to the first displacement direction X1 (and/or to the second displacement direction X2) to interact with the first sheet material 4 and/or the second sheet material 5. The countermould could be actuated for example by an anthropomorphic robot.

The forming station 8 further comprises loading-inserting means which are movable between the upper moulding body 8a and the lower moulding body 8b along a further operating direction having a horizontal component which is transverse to the first displacement direction X1 (and/or to the second displacement direction X2) to insert one or more desired reinforcing inserts between the first sheet material 4 and the second sheet material 5. The reinforcing insert can be made of metallic material or of any material having mechanical performances (for example, a mechanical resistance) better than those of the sheet materials 4, 5 so as to strengthen the thermoformed object 2.

The forming station 8 further comprises cooling means configured to cool the object 2 after the thermoforming. The cooling means can be provided in the lower moulding body 8b.

The apparatus 1 may include first retaining means configured to withdraw the first sheet material 4 from the lower frame body 9b and retain it in the forming station 8 so as to allow the displacement of the lower conveying means 9 towards the feeding station 3. The first retaining means can be provided at a peripheral region of the lower moulding body 8b.

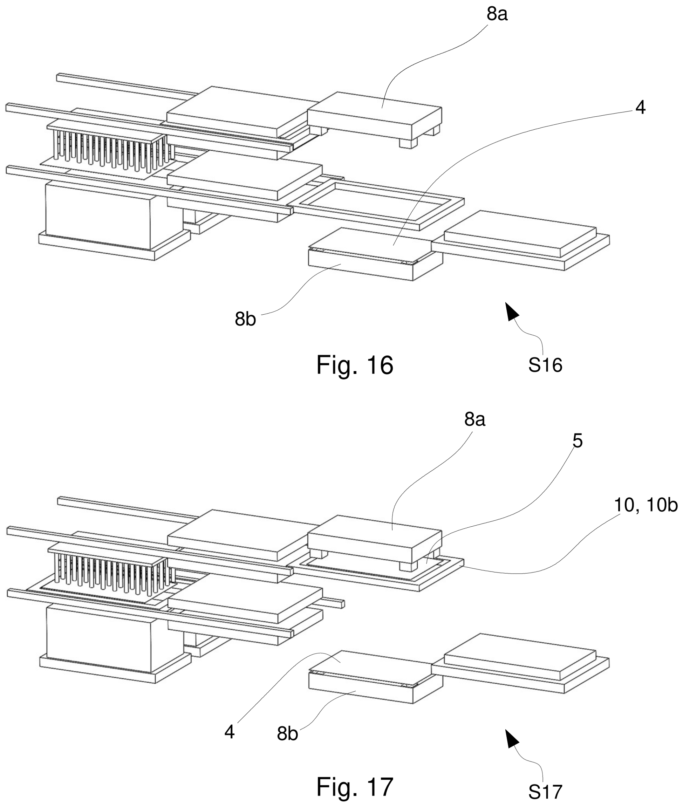

In addition or alternatively to the first retaining means, the apparatus 1 may include second retaining means configured to withdraw the second sheet material 5 from the upper frame body 10b and retain it in the forming station 8 during the release of the second sheet material 5 by the upper frame body 10b and allow a lifting movement of the upper moulding body 8a so as to disengage the upper frame body 10b and allow the movement of the upper conveying means 10 towards the feeding station 3 (Figures 17-20). The second retaining means can be provided at a peripheral region of the upper moulding body 8a.

The first retaining means and/or the second retaining means may comprise mechanical retaining means and/or vacuum retaining means.

The first retaining means and/or the second retaining means are configured to engage with an edge portion of the respective sheet material 4, 5. The edge portion of the sheet material 4, 5 can be more internal with respect to the peripheral portion of the sheet material 4, 5 with which the lower frame body 9b or the upper frame body 10b can engage, or it can coincide with such peripheral portion.

In the illustrated embodiment a single forming station 8 is provided which is configured to receive both the first sheet material 4 and the second sheet material 5 from a (single) inlet side of the forming station 8 and to evacuate the thermoformed object 2 from an outlet side of the forming station 8. In such illustrated embodiment, the apparatus 1 has an "in-line" configuration in which the inlet side and the outlet side are mutually opposite. In an alternative embodiment not illustrated, it is possible to provide an "L-shaped" configuration of the apparatus 1 in which the outlet side of the forming station 8, instead of being opposite the inlet side, is arranged laterally with respect to the inlet side.

The forming station 8 is positioned downstream of both the first heating station 6 and the second heating station 7.

In the illustrated embodiment a single feeding station 3 is provided configured to feed both the first sheet material 4 and the second sheet material 5 to the lower conveying means 9 and to the upper conveying means 10.

The feeding station 3 is positioned upstream of the first heating station 6 and of the second heating station 7.

The feeding station 3, in an upper region thereof, is provided with a loading device 3a movable vertically and configured to withdraw (from above) the first sheet material 4 or the second sheet material 5 and to bring respectively the first sheet material 4 and the second sheet material 5 to the first height for the lower conveying means 9 and to the second height for the second sheet material 5. The loading device is provided with a plurality of suction members arranged to take the sheet material by application of vacuum.

The feeding station 3, in a lower region thereof, is provided with a first loading table 3b slidable and adapted to carry a stack of first sheet materials 4 and with a second loading table 3c slidable and adapted to carry a stack of second sheet materials 5. In the illustrated embodiment, the first loading table 3b and the second loading table 3c are movable along a horizontal sliding direction which is transverse, in particular orthogonal, to the first displacement direction X1 (or equivalently to the second displacement direction X2).

The control unit is configured, in particular, to selectively move the first loading table 3b and the second loading table 3c below the loading device so as to make accessible to the latter the respective sheet materials 4, 5 (that is, the last sheet material of the respective stack).

The same functionalities of such a loader could be performed by an anthropomorphic robot provided with a suitable gripping hand.

The apparatus 1 comprises, in particular, an unloading station 11 for the thermoformed object 2 which is positioned downstream of the forming station 8. The unloading station 11 may comprise an unloading table 11a arranged to withdraw the thermoformed object 2 from the forming station 8 and evacuate the object 2 from the latter.

The apparatus 1 can furthermore comprise a process station (not illustrated) positioned downstream of the unloading station 11.

The process station can comprise a measuring station suitable to carry out a quality control (verifying for example the constructional tolerances) of the thermoformed object 2.

In addition, or alternatively, the process station can comprise a grinding station for the thermoformed object 2 which can be provided with a material-removal device suitable to finish the thermoformed object 2.

In addition, or alternatively, the process station can comprise a painting station for the thermoformed object 2.

In addition, or alternatively, the process station may comprise a thermal-conditioning station for the thermoformed object 2. The thermal-conditioning station can comprise a cooling station for the thermoformed object 2.

Below a sequence of configurations S1-S25 is described which the apparatus 1 can assume to perform a process (or cycle) of production of a thermoformed object 2.

In an initial configuration S1 (Figure 1) of the apparatus 1 the withdrawal of a first sheet material 4 in the feeding station 3 is enabled. In this initial configuration S1, the loading device 3a of the feeding station 3 is vertically aligned with the first loading table 3b. The lower frame body 9b of the lower conveying means 9 is in the first heating station 6.

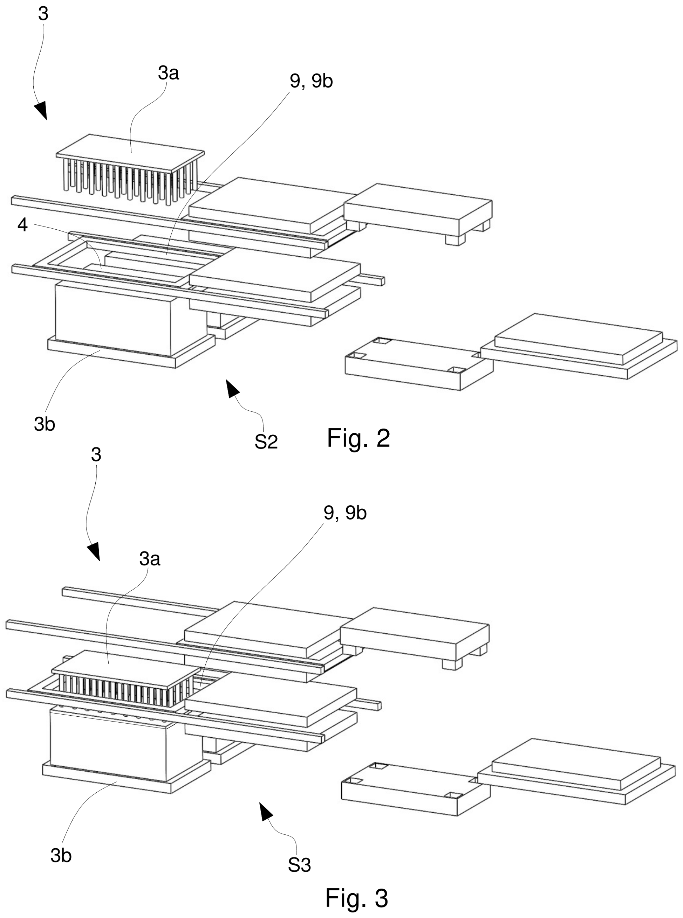

In a configuration S2 (Figure 2), the lower frame body 9b of the lower conveying means 9 is in the feeding station 3.

In a configuration S3 (Figure 3), the loading device 3a of the feeding station 3, lowering vertically, withdraws the first sheet material 4.

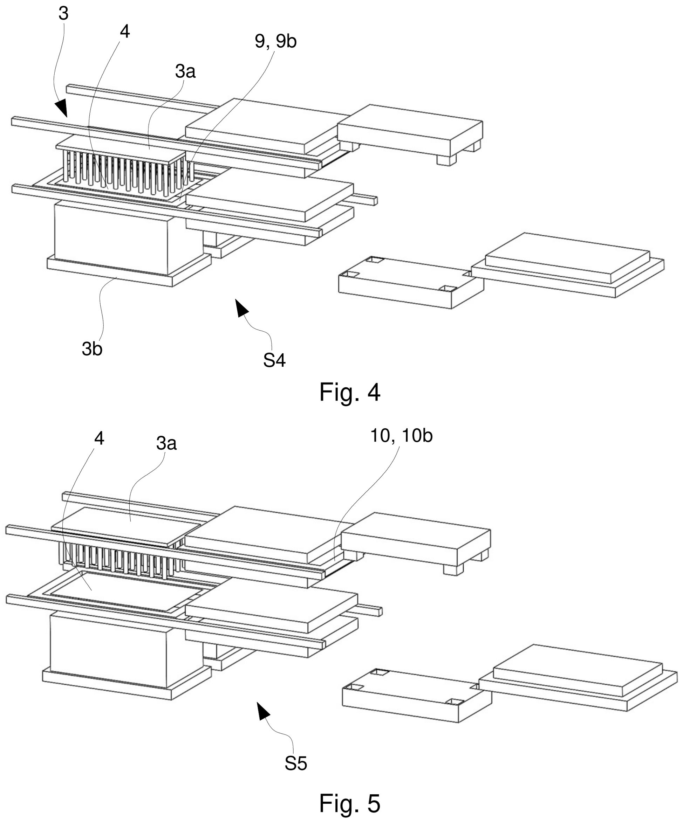

In a configuration S4 (Figure 4), the loading device 3a, rising vertically, positions the first sheet material 4 at a first height in correspondence of the lower conveying means 9, inside the lower frame body 9b.

In a configuration S5 (Figure 5), the loading device 3a releases the first sheet material 4 and rises vertically (up to a second height).

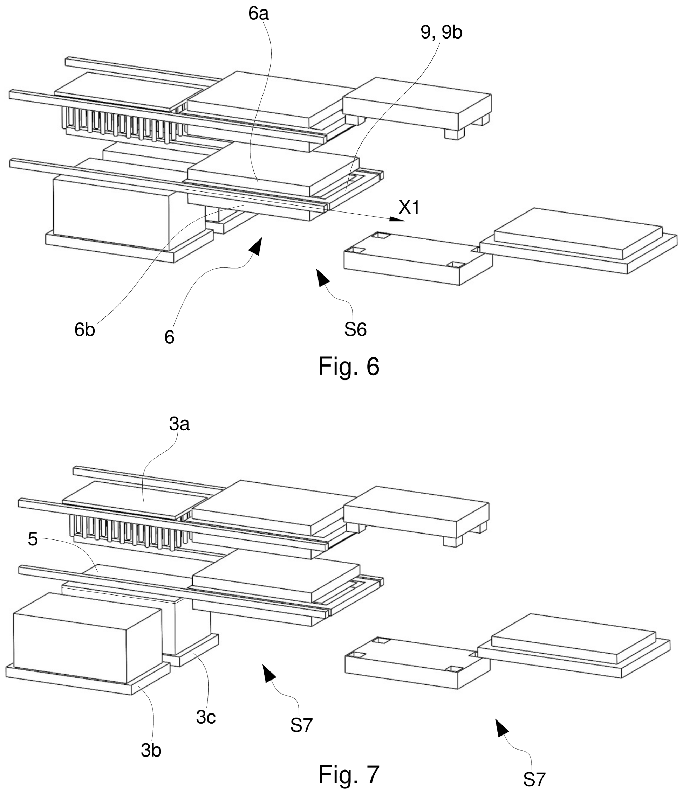

In a configuration S6 (Figure 6), the lower frame body 9b moves (horizontally) along the first direction X1 to convey the first sheet material 4 into the first heating station 6.

In a configuration S7 (Figure 7), the withdrawal of the second sheet material 5 in the feeding station 3 is enabled. In this configuration S7, the loading device 3a is vertically aligned with the second loading table 3c. The upper frame body 10b is in the second heating station 7.

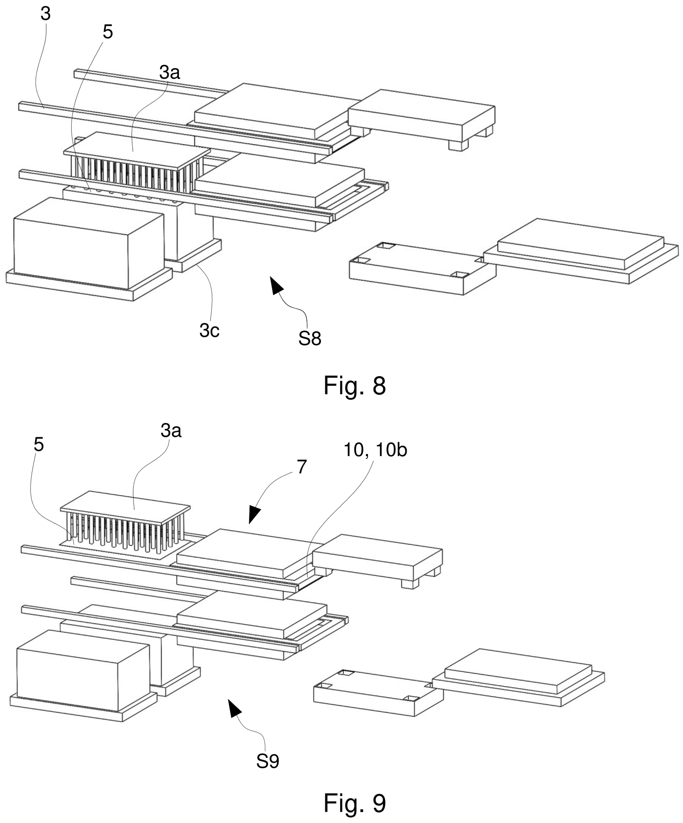

In a configuration S8 (Figure 8), the loading device 3a of the feeding station 3, lowering vertically, withdraws the second sheet material 5.

In a configuration S9 (Figure 9), the loading device 3a, rising vertically, brings the second sheet material 5 higher than the second height.

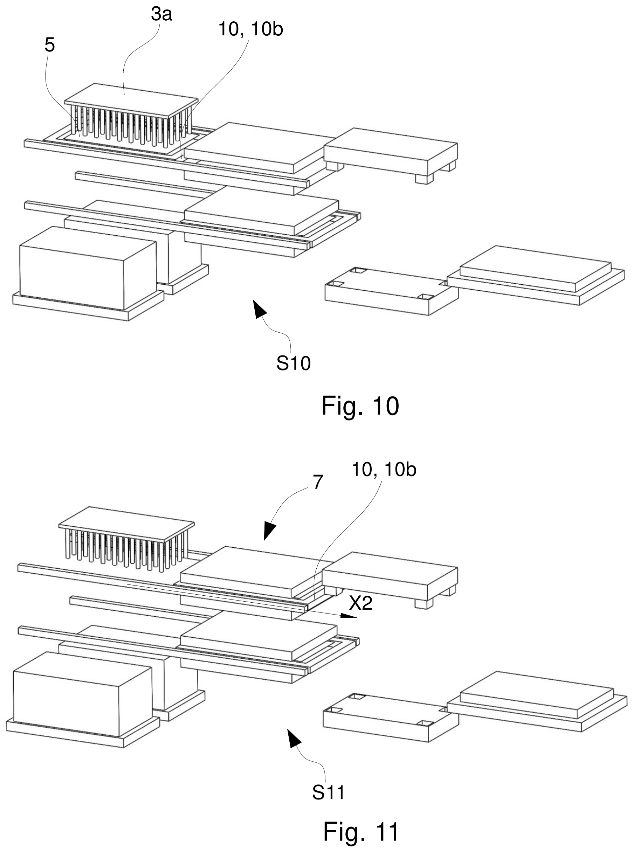

In a configuration S10 (Figure 10), the upper frame body 10b is translated horizontally into the feeding station 3 and the loading device 3a releases the second sheet material 5 at the second height in correspondence of the upper conveying means 10, inside the upper frame body 10b.

In a configuration S11 (Figure 11), the upper frame body 10b moves (horizontally) along the second direction X2 to convey the second sheet material 5 into the second heating station 7.

In a configuration S12 (Figure 12), the lower frame body 9b with the first sheet material 4 moves along the first displacement direction X1 into the forming station 8 and protrudes in cantilever fashion from the support and guide means 9a. In this configuration S12 the loading device 3a of the feeding station 3 is vertically aligned with the first loading table 3b so that the loading of a subsequent first sheet material 4 is enabled. In configuration S12 the upper moulding body 8a and the lower moulding body 8b are open and distant, in particular the lower moulding body 8b is located at a height lower than the first height.

In a configuration S13 (Figure 13) the loading device 3a, rising vertically, positions the first sheet material 4 at a height higher than the first height.

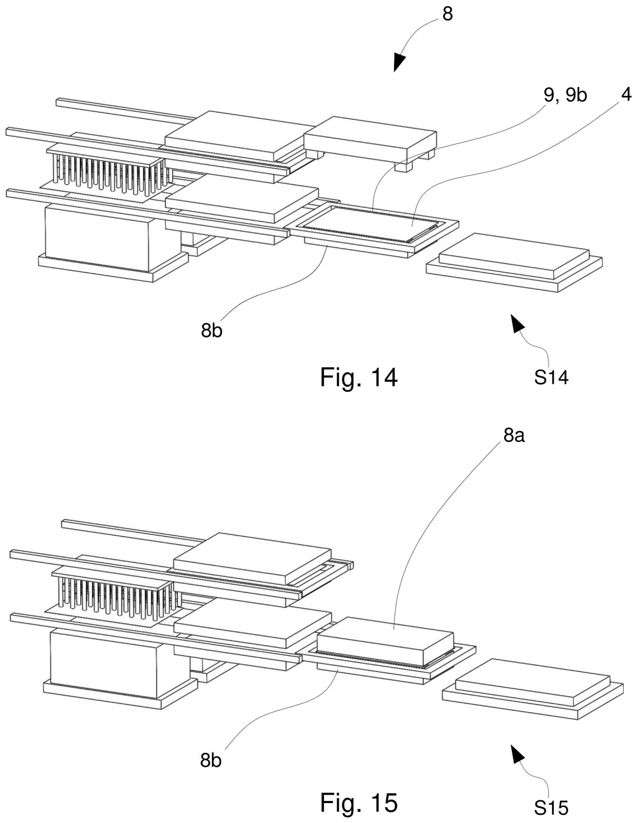

In a configuration S14 (Figure 14) the lower moulding body 8b, rising vertically, reaches the first height to interact (from below) with the first sheet material 4.

In a configuration S15 (Figure 15) the upper moulding body 8a lowers vertically towards the first height (from above) and preforms the first sheet material 4.

In a configuration S16 (Figure 16) the upper moulding body 8a and the lower moulding body 8b mutually distance from one another, while the lower frame body 9b retains the preformed sheet material 4.

During the preforming phase of the first sheet material 4 (which corresponds to configurations S11-S16), the second sheet material 5 is kept in the second heating station 7 so as to facilitate its subsequent preforming.

In a configuration S17 (Figure 17) the upper frame body 10b with the second sheet material 5 moves along the second displacement direction X2 to protrude from the support and guide means 10a into the forming station 8. In configuration S17 the lower frame body 9b is in the feeding station 3 and withdraws the first sheet material 4 from the loading device 3a.

In a configuration S18 (Figure 18) the upper moulding body 8a reaches (from above) the second height to preform the second sheet material 5. In configuration S18 the lower frame body 9b is located together with the first sheet material 4 in the first heating station 6. In this configuration S18 the loading device 3a withdraws the second sheet material 5.

In a configuration S19 (Figure 19) the upper moulding body 8a rises with respect to the second height together with the second sheet material 5. In this configuration S19 the upper retaining means retain the second sheet material 5 on the upper moulding body 8a. In configuration S19 the loading device 3a lifts the second sheet material 5 up to a height higher than the second height.

The optional operation of positioning internal inserts is not illustrated.

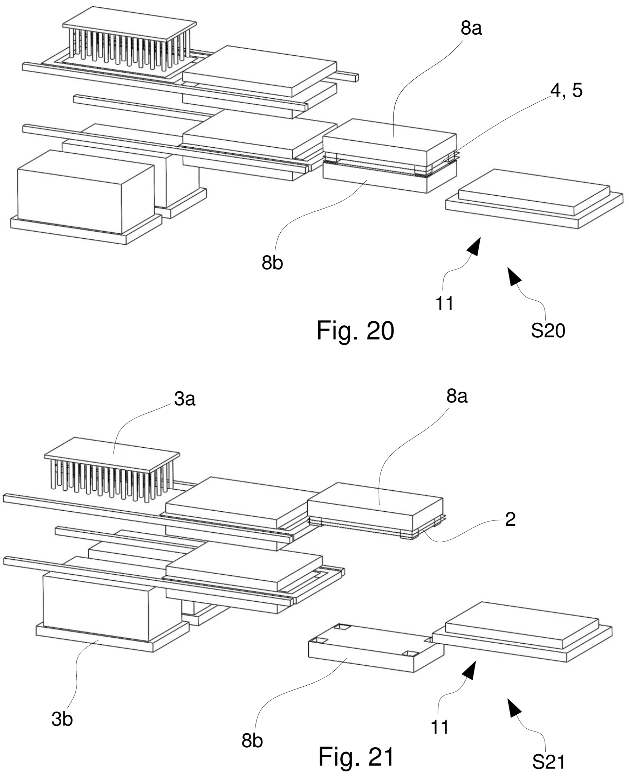

In a configuration S20 (Figure 20) the upper moulding body 8a and the lower moulding body 8b approach one another to join the first sheet material 4 (arranged on the lower moulding body 8b) with the second sheet material 5 (retained on the upper moulding body 8a) to form the product 2.

In a configuration S21 (Figure 21) the upper moulding body 8a, through the upper retaining means, retains the thermoformed object 2 and lifts it to the second height. In this configuration S21 the loading device 3a is again vertically aligned with the first loading table 3b so that the loading of another first sheet material 4 is enabled.

In a configuration S22 (Figure 22) the unloading table 11a of the unloading station 11 moves into the forming station 8 to vertically align with the upper moulding body 8a.

In a configuration S23 (Figure 23) the unloading table 11a receives (from above) the thermoformed product 2 released by the upper moulding body 8a.

In a configuration S24 (Figure 24) the unloading table 11a of the unloading station moves out of the forming station 8 to evacuate the thermoformed product 2 towards a further process station.

At this point, the production cycle is completed and can restart from a configuration S25 (Figure 25) which coincides with the initial configuration S1.

The fact that the lower conveying means 9 and the upper conveying means 10 are drivable (and movable) independently of one another along the first displacement direction X1 and along the second displacement direction X2 allows the apparatus 1 to assume optimised configurations in which multiple operations are performed simultaneously with the result of reducing the cycle times to produce a thermoformed object 2 and therefore increasing the productive yield. Examples of these optimised configurations are, for example, configuration S20, in which one sheet material is respectively forming and unloading while another sheet material is loaded, or configurations S20, S21 in which the heating of a sheet material takes place while the thermoformed object 2 is respectively in a cooling condition in the forming station 8 and on the unloading table 11a.

Furthermore, the configuration of the lower conveying means 9 and of the upper conveying means 10, in particular the fact that these are movable respectively along a first conveying path P1 and a second conveying path P2 which extend parallelly and horizontally one at a height higher than the other, allows to obtain a reduced footprint of the whole apparatus 1 and, optionally, also an arrangement ("layout") of the apparatus 1 which is optimised to be implemented by the addition of further process stations both laterally to the displacement directions X1, X2 and upstream and/or downstream of the latter (such as the process stations described above) improving the flexibility and the productive yield of the apparatus 1.

Furthermore, the configuration of the lower support and guide means 9a (and/or of the upper support and guide means 10a) allows these latter not to interfere with the forming station 8, and in particular with the upper moulding body 8a and the lower moulding body 8b, avoiding that the lower support and guide means 9a (and/or the upper support and guide means 10a) are subjected to undesired stresses (due to the closing of the moulding bodies 8a, 8b) and therefore allowing a constructive simplification with respect to the apparatuses of prior art.

Furthermore, also the fact that the first heating station 6 and the second heating station 7 are positioned vertically aligned one on the other allows to obtain a reduced footprint of the apparatus 1.

Furthermore, the specific configuration of the first heating station 6 and of the second heating station 7 allows to set the heating power deliverable (and/or the delivery times and/or the start of delivery) independently so as to process (heat) sheet materials with different characteristics (in terms of softening temperature, material composition, thickness).

In light of what has been described above, it is therefore evident that the apparatus and the method according to the invention successfully achieves all the preset objects.

## Claims

1. Apparatus (1) for producing a thermoformed object (2), comprising a feeding station (3) for a first sheet material (4) and a second sheet material (5), a first heating station (6) for heating said first sheet material (4) and a second heating station (7) for heating said second sheet material (5), a forming station (8) for forming and joining said first sheet material (4) and said second sheet material (5) to make said object (2),
lower conveying means (9) configured to convey said first sheet material (4) from said feeding station (3) to said forming station (8) through said first heating station (6) along a first displacement direction (X1), and
upper conveying means (10) configured to convey said second sheet material (5) from said feeding station (3) to said forming station (8) through said second heating station (7) along a second displacement direction (X2),
wherein said upper conveying means (10) and said lower conveying means (9) are drivable independently of one another in said first displacement direction (X1) and in said second displacement direction (X2) and are movable respectively along a first conveying path (P1) and a second conveying path (P2) that extend parallel and horizontally with one at a greater height than the other.

2. Apparatus (1) according to claim 1, wherein said lower conveying means (9) comprise a lower gripping frame (9b) which is movable and configured to engage said first sheet material (4) and a lower support and guide means (9a) which are stationary and configured to support and guide said lower gripping frame (9b) - and thus said first sheet material (4) - along said first displacement direction (X1), and wherein said upper conveying means (10) comprise an upper gripping frame (10b) which is movable and configured to engage said second sheet material (5) and upper support and guide means (10a) which are stationary and configured to support and guide said upper gripping frame (10b) - and thus said second sheet material (5) - along said second displacement direction (X2).

3. Apparatus (1) according to claim 1 or 2, wherein said lower gripping frame (9b) comprises on the perimeter lower gripping means configured to engage a peripheral portion of said first sheet material (4), and wherein said upper gripping frame (10b) comprises on the perimeter upper gripping means configured to engage a peripheral portion of said second sheet material (5).

4. Apparatus (1) according to one of claims 1 to 3, wherein said lower support and guide means (9a) comprise at least one lower rail body that extends prevalently along said first displacement direction (X1) to define said first conveying path (P1), and wherein said upper support and guide means (10a) comprise at least one upper rail body that extends prevalently along said second displacement direction (X2) to define said second conveying path (P2).

5. Apparatus (1) according to one of claims 2 to 4, wherein said lower support and guide means (9a) extend from said loading station (3) to said first heating station (6) so as to be outside, and not interfere with, and wherein said forming station (8) and said upper guide and support means (10a) extend from said loading station (3) to said second heating station (7) so as to be outside, and not interfere with, said forming station (8).

6. Apparatus (1) according to claim 5, wherein said lower gripping frame (9b) is movable from at least one first operating position (S1-S11) in which said lower gripping frame (9b) is supported by and rests on said lower support and guide means (9a) to at least one second operating position (S12-S16) in which said lower gripping frame (9b) protrudes in cantilever fashion from said lower support and guide means (9a) along said first displacement direction (X1) to position said first sheet material (4) in said forming station (8); and wherein said upper gripping frame (10b) is movable from at least one third operating position (S1-S16) in which upper gripping frame (10b) is supported by and rests on said upper support and guide means (10a) to at least one fourth operating position (S18, S19) in which said upper gripping frame (10a) protrudes in cantilever fashion from said upper support and guide means (10a) along said second displacement direction (X2) to position said second sheet material (5) in said forming station (8).

7. Apparatus (1) according to one of claims 2 to 6, wherein said first heating station (6) is arranged below said second heating station (7), said first heating station (6) and said second heating station (7) being positioned vertically aligned on one another.

8. Apparatus (1) according to one of claims 2 to 7, and comprising a control unit configured to drive said lower conveying means (9) independently of said upper conveying means (10).

9. Apparatus (1) according to claim 8, wherein said control unit is configured to set a first heating power that is dispensable by said first heating station (6) independently of a second heating power that is dispensable by said second heating station (7).

10. Apparatus (1) according to claim 9, wherein said control unit is configured to activate and control selectively said first heating station (6) and said second heating station (7) to dispense said first heating power and said second heating power respectively independently of one another.

11. Apparatus (1) according to claim 9 or 10, wherein said control unit is configured to define startup times and set heating power-dispensing durations of said first heating station (6) and of said second heating station (7) independently of one another.

12. Apparatus (1) according to any one of the preceding claims, wherein said forming station (8) comprises an upper moulding body (8a) and a lower moulding body (8b) that are movable towards and away from one another along a vertical operating direction that is transverse to said first displacement direction (X1) and/or to said second displacement direction (X2) to contact and deform said first sheet material (4) and/or said second sheet material (5) to form said thermoformed object (2).

13. Apparatus (1) according to claim 12, wherein said forming station (8) further comprises a forming countermould that is movable along an operating direction with a horizontal component that is transverse to said first displacement direction (X1) and/or to said second displacement direction (X2) to interact with said first sheet material (4) and/or said second sheet material (5).

14. Apparatus (1) according to claim 12 or 13, wherein said forming station (8) further comprises loading-inserting means that are movable between said upper moulding body (8a) and said lower moulding body (8b) along a further operating direction with a horizontal component that is transverse to said first displacement direction (X1) and/or to said second displacement direction (X2) to insert between said first sheet material (4) and said second sheet material (5) a desired reinforcing insert.

15. Apparatus (1) according to claim 2 or according to one of claims 3 to 14 as appended to claim 2, comprising first retaining means configured to withdraw said first sheet material (4) from said lower frame body (9b) and retain said first sheet material (4) in said forming station (8) so as to release said lower frame body (9b) from said forming station (8) and permit said lower frame body (9b) to move to said feeding station (3).

16. Apparatus according to claim 2 or according to one of claims 3 to 15 as appended to claim 2, comprising second retaining means configured to withdraw said second sheet material (5) from said upper frame body (10b) and retain second sheet material (5) in said forming station (8) during the release of said second sheet material (5) by said upper frame body (10b) and permit a lifting movement of said upper moulding body (8a) so as to release said upper frame body (10b) from said forming station (8) and enable said upper frame body (10b) to move to said feeding station (3).

17. Apparatus (1) according to any one of the preceding claims, and comprising an unloading station (11) for said thermoformed object (2) downstream of said forming station (8) and a process station positioned downstream of said unloading station (11), said process station comprising a measuring station and/or a grinding station and/or a painting station and/or a thermal conditioning station for said thermoformed object.

18. Method for producing a thermoformed object (2) comprising the following steps:
feeding a first sheet material (4) and a second sheet material (5) by a feeding station (3),
- heating said first sheet material (4) by a first heating station (6) and heating said second sheet material (5) by a second heating station (7),
- forming and joining said first sheet material (4) and said second sheet material (5) to make said object (2) by a forming station (8),
- conveying by lower conveying means (9) said first sheet material (4) from said feeding station (3) to said forming station (8) through said first heating station (6) along a first displacement direction (X1), and
- further conveying by upper conveying means (10) said second sheet material (5) from said feeding station (3) to said forming station (8) through said second heating station (7) along a second displacement direction (X2),
wherein said conveying and further conveying occur independently of one another in the first displacement direction (X1) and in the second displacement direction (X2) and respectively along a first conveying path (P1) and a second conveying (P2) that extend parallel and horizontally to one at a greater height than the other.

19. Method according to claim 18, wherein at least one of said upper conveying means (10) and said lower conveying means (9) are positioned outside said forming station (8) - after releasing the respective sheet material (4, 5) - to load a subsequent sheet material (4, 5) into the feeding station (3), whilst the forming step occurs in said forming station (8).

20. Method according to claim 19, wherein, after loading said subsequent sheet material (4, 5), said at least one of said upper conveying means (10) and said lower conveying means (9) are positioned in the respective heating station (6, 7), whilst in said forming station (8) the forming step or a cooling step of forming or cooling the thermoformed object (2) occurs that is subsequent to said forming step.

21. Method according to any one of claims 18 to 20, wherein said forming station (8) includes an upper moulding body (8a) and a lower moulding body (8b), and wherein, before said forming and joining together of said first sheet material (4) and said second sheet material (5) to make said object (2), said first sheet material (4) is preformed with the help of said upper moulding body (8a).
